# EUROPEAN PATENT APPLICATION

(11) **EP 4 825 615 A1**
(43) Date of publication of application: **21.10.2026**
(21) Application number: 25878589.8
(22) Date of filing: 14.04.2025
(51) Int. Cl.: B60H 1/00, B60H 1/32

(54) **THERMAL MANAGEMENT SYSTEM AND VEHICLE**

(30) Priority: 18.10.2024 CN 202411461852
(71) Applicant: Xiaogan Huagong Gaoli Electronics Co., Ltd., Xiaogan, Hubei 432100 (CN)
(72) Inventor: NIE, Bo, Xiaogan, Hubei 432100 (CN); ZOU, Yong, Xiaogan, Hubei 432100 (CN); SUN, Yu, Xiaogan, Hubei 432100 (CN); WANG, Wei, Xiaogan, Hubei 432100 (CN); WU, Qiang, Xiaogan, Hubei 432100 (CN); LI, Sheng, Xiaogan, Hubei 432100 (CN); LIU, Zhouyu, Xiaogan, Hubei 432100 (CN)
(74) Representative: Herrero & Asociados, S.L.
(86) International application number: PCT/CN2025/088737
(87) International publication number: WO 2026/081439

(57) **Abstract**

A thermal management system includes a battery chiller (141), a refrigerant circuit (1), and a coolant circuit (2). The battery chiller (141) is connected to the refrigerant circuit (1) and the coolant circuit (2), and is configured to transfer heat between the refrigerant circuit (1) and the coolant circuit (2). The coolant circuit (2) includes a heating circuit (11), a battery thermal management circuit (12), an electric-drive cooling circuit (13), a radiator circuit (14), a first control valve (15), and a second control valve (16). The first control valve and the second control valve are configured to cooperate with each other to switch manners of communication among the refrigerant circuit, the heating circuit, the battery thermal management circuit, the electric-drive cooling circuit, and the radiator circuit. Under different temperature conditions, heat transfer is performed in different manners among the refrigerant circuit, the heating circuit, the battery thermal management circuit, the electric-drive cooling circuit, and the radiator circuit, thereby simplifying the structure of the thermal management system and reducing costs. A vehicle including the thermal management system is further disclosed.

## Description

The present application claims priority to Chinese Patent Application No. 202411461852.0, filed on October 18, 2024, and entitled "Thermal Management System and Vehicle."

### TECHNICAL FIELD

The present application relates to the technical field of thermal management, and in particular, to a thermal management system and a vehicle.

### BACKGROUND

With the popularization of new energy vehicles, higher requirements have been imposed on energy consumption of new energy vehicles in the market. A vehicle thermal management system exerts a significant influence on vehicle energy consumption. At present, a vehicle thermal management system mainly includes a heater thermal management system, a battery thermal management system, and an electric-drive thermal management system. Heat exchange can be performed among the heater thermal management system, the battery thermal management system, and the electric-drive thermal management system to reduce energy consumption of the vehicle. However, existing thermal management systems are structurally complex and costly.

### SUMMARY

Embodiments of the present application provide a thermal management system and a vehicle, to solve the problems of structural complexity and high costs in existing thermal management systems.

A thermal management system, including a battery chiller, a refrigerant circuit, and a coolant circuit;
where the battery chiller is connected to the refrigerant circuit and the coolant circuit, and is configured to transfer heat between the refrigerant circuit and the coolant circuit;
the coolant circuit includes a heating circuit, a battery thermal management circuit, an electric-drive cooling circuit, a radiator circuit, a first control valve, and a second control valve;
the first control valve is connected to the second control valve, the refrigerant circuit, the heating circuit, the battery thermal management circuit, the electric-drive cooling circuit, and the radiator circuit;
the second control valve is connected to the heating circuit and the battery thermal management circuit; and
the first control valve and the second control valve are configured to cooperate with each other to switch manners of communication among the refrigerant circuit, the heating circuit, the battery thermal management circuit, the electric-drive cooling circuit, and the radiator circuit, thereby enabling heat transfer in different manners among the refrigerant circuit, the heating circuit, the battery thermal management circuit, the electric-drive cooling circuit, and the radiator circuit under different temperature conditions.

Further, where the first control valve is a ten-way valve;
a first end and a fourth end of the ten-way valve are connected to the refrigerant circuit and the second control valve;
a second end and a third end of the ten-way valve are connected to the battery thermal management circuit;
a fifth end and an eighth end of the ten-way valve are connected to the electric-drive cooling circuit;
a sixth end and a seventh end of the ten-way valve are connected through a pipe; and
a ninth end and a tenth end of the ten-way valve are connected to the radiator circuit.

Further, where the second control valve is a three-way valve;
a first end of the three-way valve is connected to a first end of the heating circuit; a second end of the three-way valve is connected to a first end of the battery thermal management circuit and the first end of the ten-way valve; and a third end of the three-way valve is connected to a second end of the heating circuit, a second end of the battery thermal management circuit, and the fourth end of the ten-way valve.

Further, where when the thermal management system is under a high-temperature condition,
the refrigerant circuit is in a cooling mode; and
the first control valve is in communication with the refrigerant circuit and the battery thermal management circuit, and/or the first control valve is in communication with the electric-drive cooling circuit and the radiator circuit.

Further, where when the thermal management system is under a medium-temperature condition,
the refrigerant circuit is in a dehumidification mode; the first control valve is in communication with the refrigerant circuit, the battery thermal management circuit, the electric-drive cooling circuit, and the radiator circuit; and the second control valve disconnects the heating circuit from the battery thermal management circuit;
or, the refrigerant circuit is in a non-operating mode, the first control valve is in communication with the refrigerant circuit, the battery thermal management circuit, and the radiator circuit, and/or the first control valve is in communication with the electric-drive cooling circuit to form a self-circulating electric-drive cooling circuit.

Further, where when the thermal management system is under a low-temperature condition,
the refrigerant circuit is in a heat-pump coolant-circuit heat absorption mode, the first control valve is in communication with the refrigerant circuit and the battery thermal management circuit, and/or the first control valve is in communication with the electric-drive cooling circuit to form a self-circulating electric-drive cooling circuit; the second control valve is in communication with the heating circuit;
or, the refrigerant circuit is in a heat-pump air heat absorption mode, the first control valve is in communication with the battery thermal management circuit and the electric-drive cooling circuit;
or, the refrigerant circuit is in a non-operating mode, the first control valve is in communication with the battery thermal management circuit, and/or the first control valve is in communication with the electric-drive cooling circuit; the second control valve is in communication with the heating circuit and the battery thermal management circuit;
or, the refrigerant circuit is in a heat-pump air heat absorption mode, the first control valve is in communication with the battery thermal management circuit, and/or the first control valve is in communication with the electric-drive cooling circuit and the radiator circuit; the second control valve is in communication with the heating circuit and the battery thermal management circuit.

Further, where the battery thermal management circuit comprises a battery inlet coolant temperature sensor, a battery circuit pump, a power battery, and a battery outlet coolant temperature sensor;
the battery circuit pump and the power battery are arranged in series between the battery inlet coolant temperature sensor and the battery outlet coolant temperature sensor; and
the battery inlet coolant temperature sensor is connected to the second end of the three-way valve and the second end of the ten-way valve, and the battery outlet coolant temperature sensor is connected to the third end of the three-way valve and the third end of the ten-way valve.

Further, where the electric-drive cooling circuit comprises an electric-drive inlet coolant temperature sensor, an electric-drive circuit pump, an electric drive assembly, and an electric-drive outlet coolant temperature sensor;
the electric-drive circuit pump and the electric drive assembly are arranged in series between the electric-drive inlet coolant temperature sensor and the electric-drive outlet coolant temperature sensor; and
the electric-drive inlet coolant temperature sensor is connected to the fifth end of the ten-way valve, and the electric-drive outlet coolant temperature sensor is connected to the eighth end of the ten-way valve.

Further, where the heating circuit comprises a heating circuit pump, a coolant heater, and a heater core;
the heating circuit pump, the coolant heater, and the heater core are arranged in series between the first end and the third end of the three-way valve.

Further, where the refrigerant circuit comprises a gas-liquid separator, a compressor, an external heat-exchange electronic expansion valve, a condenser branch, an evaporator branch, and an external heat exchange branch;
a first end of the gas-liquid separator is connected to a second end of the evaporator branch, a second end of the condenser branch, a second end of the external heat exchange branch, and the coolant circuit, a second end of the gas-liquid separator is connected to an input end of the compressor, an output end of the compressor is connected to a first end of the condenser branch and a first end of the external heat exchange branch, and a first end of the evaporator branch is connected to the first end of the condenser branch and the first end of the external heat exchange branch; and
the external heat-exchange electronic expansion valve is connected to the condenser branch and the external heat exchange branch.

Further, where the condenser branch comprises an internal-condenser solenoid valve, a condenser, a condenser outlet temperature sensor, an external heat-exchange bypass solenoid valve, and an external heat-exchange bypass circuit check valve, wherein the internal-condenser solenoid valve, the condenser, the condenser outlet temperature sensor, the external heat-exchange bypass solenoid valve, and the external heat-exchange bypass circuit check valve are sequentially arranged in series between the first end and the second end of the condenser branch;
the external heat exchange branch comprises an internal-condenser bypass solenoid valve, an external heat exchanger, an external heat-exchange outlet temperature sensor, and an external heat-exchange circuit check valve, wherein the internal-condenser bypass solenoid valve, the external heat exchanger, the external heat-exchange outlet temperature sensor, and the external heat-exchange circuit check valve are sequentially arranged in series between the first end and the second end of the external heat exchange branch;
a first end of the external heat-exchange electronic expansion valve is connected to a connection node between the internal-condenser bypass solenoid valve and the external heat exchanger, and a second end of the external heat-exchange electronic expansion valve is connected to a connection node between the condenser outlet temperature sensor and the external heat-exchange bypass solenoid valve; and
the evaporator branch comprises an evaporator electronic expansion valve, an evaporator, and an evaporator outlet temperature-pressure sensor, wherein the evaporator electronic expansion valve, the evaporator, and the evaporator outlet temperature-pressure sensor are sequentially arranged in series between the first end and the second end of the evaporator branch.

A vehicle, including the thermal management system described above.

In the thermal management system and vehicle described above, the thermal management system includes a battery chiller, a refrigerant circuit, and a coolant circuit. The battery chiller is connected to the refrigerant circuit and the coolant circuit, and is configured to transfer heat between the refrigerant circuit and the coolant circuit. The coolant circuit includes a heating circuit, a battery thermal management circuit, an electric-drive cooling circuit, a radiator circuit, a first control valve, and a second control valve. The first control valve is connected to the second control valve, the refrigerant circuit, the heating circuit, the battery thermal management circuit, the electric-drive cooling circuit, and the radiator circuit. The second control valve is connected to the heating circuit and the battery thermal management circuit. The first control valve and the second control valve cooperate with each other to switch and control manners of communication among the refrigerant circuit, the heating circuit, the battery thermal management circuit, the electric-drive cooling circuit, and the radiator circuit, thereby enabling heat transfer in different manners among the refrigerant circuit, the heating circuit, the battery thermal management circuit, the electric-drive cooling circuit, and the radiator circuit under different temperature conditions. By controlling operating states of the first control valve and the second control valve, manners of communication among the refrigerant circuit, the heating circuit, the battery thermal management circuit, the electric-drive cooling circuit, and the radiator circuit are switched, thereby enabling the first control valve and the second control valve to cooperate to control heat transfer in different manners among the refrigerant circuit, the heating circuit, the battery thermal management circuit, the electric-drive cooling circuit, and the radiator circuit, simplifying the structure of the thermal management system, and reducing costs.

### BRIEF DESCRIPTION OF DRAWINGS

To describe the technical solutions in the embodiments of the present application more clearly, the following briefly introduces the drawings used in the description of the embodiments of the present application. Apparently, the drawings described below show merely some embodiments of the present application, and a person of ordinary skill in the art may derive other drawings from these drawings without creative efforts.
Fig. 1 is a schematic diagram of a thermal management system according to an embodiment of the present application;
Fig. 2 is another schematic diagram of a thermal management system according to an embodiment of the present application;
Fig. 3 is another schematic diagram of a thermal management system according to an embodiment of the present application;
Fig. 4 is another schematic diagram of a thermal management system according to an embodiment of the present application;
Fig. 5 is another schematic diagram of a thermal management system according to an embodiment of the present application;
Fig. 6 is another schematic diagram of a thermal management system according to an embodiment of the present application;
Fig. 7 is another schematic diagram of a thermal management system according to an embodiment of the present application;
Fig. 8 is another schematic diagram of a thermal management system according to an embodiment of the present application; and
Fig. 9 is another schematic diagram of a thermal management system according to an embodiment of the present application.

### DETAILED DESCRIPTION OF EMBODIMENTS

The technical solutions in the embodiments of the present application are described clearly and completely below with reference to the drawings in the embodiments of the present application. Apparently, the described embodiments are merely some, rather than all, of the embodiments of the present application. All other embodiments obtained by a person of ordinary skill in the art based on the embodiments of the present application without creative efforts shall fall within the protection scope of the present application.

It should be understood that the present application may be implemented in different forms and should not be construed as being limited to the embodiments set forth herein. Rather, these embodiments are provided so that the disclosure will be thorough and complete, and will fully convey the scope of the present application to a person skilled in the art. In the drawings, sizes and relative sizes of layers and regions may be exaggerated for clarity, and the same reference numerals denote the same elements throughout.

It should be understood that when an element or layer is referred to as being "on," "adjacent to," "connected to," or "coupled to" another element or layer, the element or layer may be directly on, adjacent to, connected to, or coupled to the another element or layer, or an intervening element or layer may be present. In contrast, when an element is referred to as being "directly on," "directly adjacent to," "directly connected to," or "directly coupled to" another element or layer, no intervening element or layer is present. It should be understood that although the terms first, second, third, and the like may be used to describe various elements, components, regions, layers, and/or portions, these elements, components, regions, layers, and/or portions should not be limited by these terms. These terms are merely used to distinguish one element, component, region, layer, or portion from another element, component, region, layer, or portion. Therefore, a first element, component, region, layer, or portion discussed below may be referred to as a second element, component, region, layer, or portion without departing from the teachings of the present application.

Spatially relative terms such as "under," "below," "lower," "beneath," "above," "upper," and the like may be used herein for ease of description to describe a relationship between one element or feature and another element or feature as shown in the drawings. It should be understood that, in addition to the orientation shown in the drawings, the spatially relative terms are intended to encompass different orientations of a device in use or operation. For example, if the device in the drawings is turned over, an element or feature described as being "below," "beneath," or "under" another element or feature would then be oriented "above" the another element or feature. Therefore, the exemplary terms "below" and "under" may encompass both an above orientation and a below orientation. The device may be otherwise oriented, for example rotated by 90 degrees or at another orientation, and the spatial descriptors used herein should be interpreted accordingly.

The terms used herein are for the purpose of describing specific embodiments only and are not intended to limit the present application. As used herein, the singular forms "a," "an," and "the" are also intended to include plural forms unless the context clearly indicates otherwise. It should also be understood that the terms "comprise" and/or "include," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of the associated listed items.

For a thorough understanding of the present application, detailed structures and steps are set forth in the following description to explain the technical solutions proposed by the present application. Preferred embodiments of the present application are described in detail below. However, in addition to these detailed descriptions, the present application may also have other implementations.

This embodiment provides a thermal management system applied to a vehicle. Exemplarily, the vehicle includes a passenger compartment, a battery module, and an electric-drive module. Exemplarily, the battery module includes a power battery 112. The electric-drive module includes an electric drive assembly 132. Optionally, the electric drive assembly 132 includes a drive motor, a differential reducer, a motor controller, an on-board charger, and a DC/DC converter. The thermal management system is applied to the vehicle to perform thermal management on the passenger compartment, the battery module, and the electric-drive module, thereby enabling heat transfer among the passenger compartment, the battery module, and the electric-drive module under different temperature conditions and reducing power consumption of the vehicle. Exemplarily, the temperature conditions include a high-temperature condition, a medium-temperature condition, and a low-temperature condition. Exemplarily, the high-temperature condition corresponds to an ambient temperature above 40°C, the medium-temperature condition corresponds to an ambient temperature between 15°C and 40°C, and the low-temperature condition corresponds to an ambient temperature below 15°C.

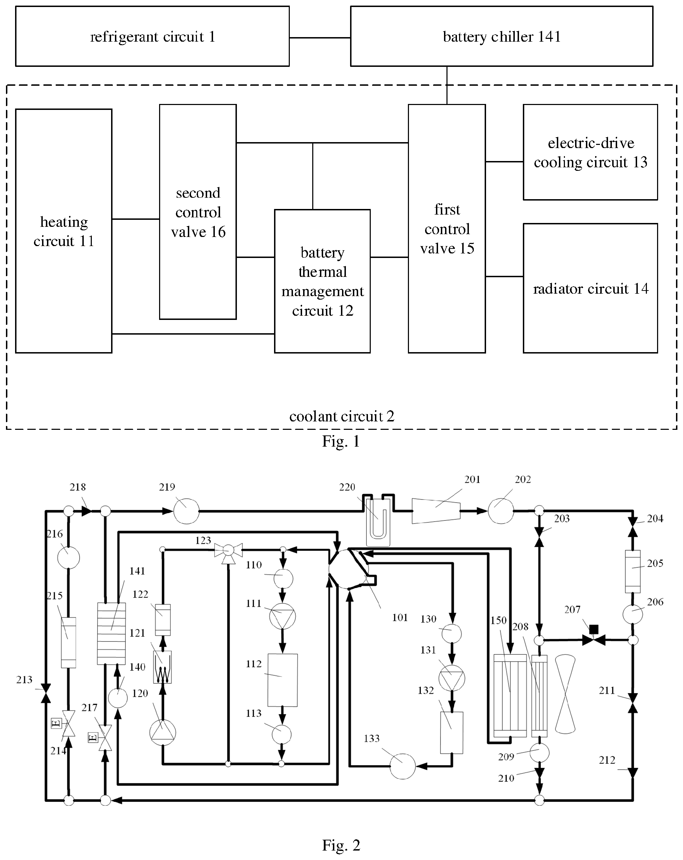

This embodiment provides a thermal management system. As shown in Fig. 1, the thermal management system includes a battery chiller 141, a refrigerant circuit 1, and a coolant circuit 2; the battery chiller 141 is connected to the refrigerant circuit 1 and the coolant circuit 2, and is configured to transfer heat between the refrigerant circuit 1 and the coolant circuit 2. The coolant circuit 2 includes a heating circuit 11, a battery thermal management circuit 12, an electric-drive cooling circuit 14, a radiator circuit 14, a first control valve 15, and a second control valve 16; the first control valve 15 is connected to the second control valve 16, the refrigerant circuit 1, the heating circuit 11, the battery thermal management circuit 12, the electric-drive cooling circuit 14, and the radiator circuit 14; the second control valve 16 is connected to the heating circuit 11 and the battery thermal management circuit 12; and the first control valve 15 and the second control valve 16 are configured to cooperate with each other to switch and control manners of communication among the refrigerant circuit 1, the heating circuit 11, the battery thermal management circuit 12, the electric-drive cooling circuit 14, and the radiator circuit 14, thereby enabling heat transfer in different manners among the refrigerant circuit 1, the heating circuit 11, the battery thermal management circuit 12, the electric-drive cooling circuit 14, and the radiator circuit 14 under different temperature conditions.

In this embodiment, by connecting the first control valve 15 to the second control valve 16, the refrigerant circuit 1, the heating circuit 11, the battery thermal management circuit 12, the electric-drive cooling circuit 14, and the radiator circuit 14, and connecting the second control valve 16 to the heating circuit 11 and the battery thermal management circuit 12, operating states of the first control valve 15 and the second control valve 16 can be controlled to switch manners of communication among the refrigerant circuit 1, the heating circuit 11, the battery thermal management circuit 12, the electric-drive cooling circuit 14, and the radiator circuit 14, thereby enabling the first control valve 15 and the second control valve 16 to cooperate to control heat transfer in different manners among the refrigerant circuit 1, the heating circuit 11, the battery thermal management circuit 12, the electric-drive cooling circuit 14, and the radiator circuit 14, simplifying the structure of the thermal management system, and reducing costs.

In an embodiment, as shown in Fig. 2, the first control valve 15 is a ten-way valve 101; a first end and a fourth end of the ten-way valve 101 are connected to the refrigerant circuit 1 and the second control valve 16; a second end and a third end of the ten-way valve 101 are connected to the battery thermal management circuit 12; a fifth end and an eighth end of the ten-way valve 101 are connected to the electric-drive cooling circuit 14; a sixth end and a seventh end of the ten-way valve 101 are connected through a pipe; and a ninth end and a tenth end of the ten-way valve 101 are connected to the radiator circuit 14.

As an example, the first end and the fourth end of the ten-way valve 101 are connected to the refrigerant circuit 1 through the battery chiller 141. In this example, the first end and the fourth end of the ten-way valve 101 are connected to the refrigerant circuit 1 through the battery chiller 141, thereby allowing the battery thermal management circuit 12, the electric-drive cooling circuit 14, and the radiator circuit 14 connected to the ten-way valve 101, and the heating circuit 11 connected to the second control valve 16, to exchange heat with the refrigerant circuit 1 through the battery chiller 141.

As an example, the battery thermal management circuit 12 includes a battery inlet coolant temperature sensor 110, a battery circuit pump 111, a power battery 112, and a battery outlet coolant temperature sensor 113. The battery thermal management circuit 12 is further configured to be connected to a battery module of the vehicle. Exemplarily, the battery module and the battery circuit pump 111 are arranged in series between the battery inlet coolant temperature sensor 110 and the battery outlet coolant temperature sensor 113. The battery inlet coolant temperature sensor 110 is connected to the second end of the ten-way valve 101, and the battery outlet coolant temperature sensor 113 is connected to the third end of the ten-way valve 101. In this example, the power battery 112 needs to be maintained within a specified temperature range during operation. Therefore, under different temperature conditions, the power battery 112 needs to be cooled or heated to ensure operating efficiency of the power battery 112. Exemplarily, under a low-temperature condition, when the power battery 112 discharges externally, heat is generated, and the heat may also be used for heating the passenger compartment through the refrigerant circuit 1 or the coolant circuit 2, thereby reducing energy consumption required for heating the passenger compartment. The battery inlet coolant temperature sensor 110 and the battery outlet coolant temperature sensor 113 are configured to detect coolant temperatures at an inlet and an outlet of the power battery 112, respectively, to facilitate implementation of control strategies such as coolant temperature control and thermal runaway protection in the thermal management system.

As an example, as shown in Fig. 2, the electric-drive cooling circuit 14 includes an electric-drive inlet coolant temperature sensor 130, an electric-drive circuit pump 131, an electric drive assembly 132, and an electric-drive outlet coolant temperature sensor 133. The electric drive assembly 132 and the electric-drive circuit pump 131 are arranged in series between the electric-drive inlet coolant temperature sensor 130 and the electric-drive outlet coolant temperature sensor 133. The electric-drive inlet coolant temperature sensor 130 is connected to the fifth end of the ten-way valve 101, and the electric-drive outlet coolant temperature sensor 133 is connected to the eighth end of the ten-way valve 101. Exemplarily, the electric drive assembly 132 needs to be maintained below a maximum allowable operating temperature to ensure vehicle safety. Therefore, when the temperature of the electric drive assembly 132 is excessively high, cooling is required. In addition, lubricating oil in a differential reducer in the electric drive assembly 132 has a relatively high viscosity at a low temperature, which reduces efficiency, and therefore long-term operation at a low temperature needs to be avoided. Accordingly, operating states of the first control valve 15 and the second control valve 16 also need to be controlled, such that the thermal management system controls the electric drive assembly 132 to operate within a suitable temperature range. The electric-drive circuit pump 131 is configured to drive coolant to flow in the thermal management system. The electric-drive inlet coolant temperature sensor 130 and the electric-drive outlet coolant temperature sensor 133 are configured to detect coolant temperatures at an inlet and an outlet of the electric drive assembly 132, respectively, to facilitate implementation of control strategies such as coolant temperature control and thermal protection in the thermal management system.

As an example, as shown in Fig. 2, the radiator circuit 14 includes a radiator 150. Exemplarily, the radiator 150 is a liquid-gas heat exchanger, and is configured to dissipate heat in the coolant to ambient air, thereby reducing the temperature of the coolant.

In this embodiment, by switching opened and closed states between different ports of the ten-way valve 101, the refrigerant circuit 1, the second control valve 16, the battery thermal management circuit 12, the electric-drive cooling circuit 14, and the radiator circuit 14 can be in communication with each other, thereby flexibly performing heat exchange between different circuits, with a simple structure and relatively low costs.

In an embodiment, as shown in Fig. 2, the second control valve 16 is a three-way valve 123; a first end of the three-way valve 123 is connected to a first end of the heating circuit 11, a second end of the three-way valve 123 is connected to a first end of the battery thermal management circuit 12 and the first end of the ten-way valve 101, and a third end of the three-way valve 123 is connected to a second end of the heating circuit 11, a second end of the battery thermal management circuit 12, and the fourth end of the ten-way valve 101.

As an example, the heating circuit 11 is arranged in the passenger compartment of the vehicle and is configured to provide heating to the passenger compartment. Exemplarily, the heating circuit 11 includes a heating circuit pump 120, a coolant heater 121, and a heater core 122. The heating circuit pump 120, the coolant heater 121, and the heater core 122 are arranged in series between the first end and the third end of the three-way valve 123. Exemplarily, the coolant heater 121 may be, for example, a PCT resistor. Exemplarily, the coolant heater 121 may heat, by consuming electric energy of the power battery 112 in the vehicle, coolant flowing through an internal pipeline of the heating circuit 11, and may heat other components including the power battery 112 by means of the coolant. The heater core 122 is a gas-liquid heat exchanger, and may use heat of heated coolant in a flow passage of the heater core 122 to heat air. The heated air is used to heat the passenger compartment, thereby providing heating to the passenger compartment. The heating circuit pump 120 is configured to drive the coolant to flow in the pipeline.

As an example, the battery inlet coolant temperature sensor 110 in the battery thermal management circuit 12 is connected to the second end of the three-way valve 123, and the battery outlet coolant temperature sensor 113 in the battery thermal management circuit 12 is connected to the third end of the three-way valve 123. The second end and the third end of the three-way valve 123 are further connected to the first end and the fourth end of the ten-way valve 101, respectively.

In this embodiment, by switching opened and closed states between different ports of the three-way valve 123, the heating circuit 11, the battery thermal management circuit 12, and the first control valve 15 can be in communication with each other, and heat exchange between different circuits can be flexibly switched by the first control valve 15 and the second control valve 16, with a simple structure and relatively low costs.

In an embodiment, as shown in Fig. 2, the thermal management system further includes the battery chiller 141; the battery chiller 141 is connected to the refrigerant circuit 1 and the coolant circuit 2.

As an example, a first end of the battery chiller 141 is connected to the refrigerant circuit 1 through a chiller electronic expansion valve, and a second end of the battery chiller 141 is connected to the coolant circuit 2 through a chiller inlet coolant temperature sensor. In this example, the battery chiller 141 is structurally a liquid-liquid heat exchanger, and can implement heat exchange between refrigerant and coolant, mainly for cooling the power battery 112. Exemplarily, the battery chiller 141 may absorb heat from the coolant circuit 2 and exchange heat with the refrigerant circuit 1, such that the heat absorbed by the battery chiller 141 is used to provide heat to the passenger compartment. The chiller inlet coolant temperature sensor is configured to detect an inlet coolant temperature of the battery chiller 141, to facilitate implementation of control logic such as control of the battery circuit pump 111 in the battery thermal management circuit 12 and heat-pump waste heat recovery control.

In an embodiment, when the thermal management system is under a high-temperature condition, the refrigerant circuit 1 is in a cooling mode; the first control valve 15 is in communication with the refrigerant circuit 1 and the battery thermal management circuit 12, and/or the first control valve 15 is in communication with the electric-drive cooling circuit 14 and the radiator circuit 14.

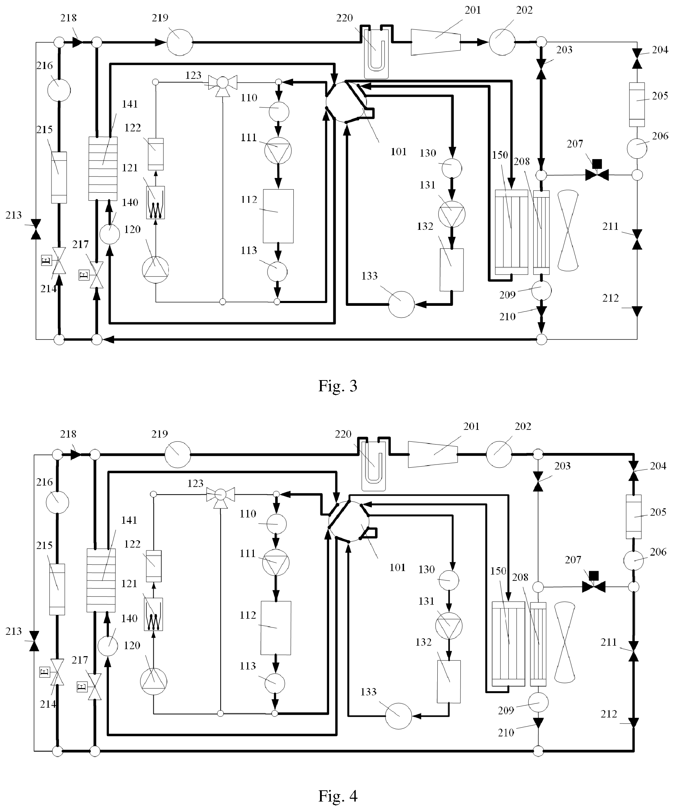

In this embodiment, when the thermal management system is under a high-temperature condition, for example, above 40°C, the refrigerant circuit 1 may be controlled to be in a cooling mode. When the first control valve 15 is in communication with the refrigerant circuit 1 and the battery thermal management circuit 12, heat exchange can be performed between the refrigerant circuit 1 in the cooling mode and the battery thermal management circuit 12. As shown in Fig. 3, the battery circuit pump 111 in the battery thermal management circuit 12 drives coolant to flow through the power battery 112 to take away heat of the power battery 112. The coolant then flows through the battery outlet coolant temperature sensor 113, the ten-way valve 101, the chiller inlet coolant temperature sensor, and the battery chiller 141, and is cooled by low-temperature refrigerant in the battery chiller 141, thereby reducing the temperature of the coolant. The coolant then returns to the battery circuit pump 111 through the ten-way valve 101 and the battery inlet coolant temperature sensor 110. Through this circulation, the temperature of the power battery 112 is reduced by using the battery chiller 141. Meanwhile, the electric-drive circuit pump 131 in the electric-drive cooling circuit 14 drives coolant to flow through the electric drive assembly 132 of the vehicle to take away heat of the electric drive assembly 132. The coolant passes through the electric-drive outlet coolant temperature sensor 133, the ten-way valve 101, and the radiator 150, and is cooled by air flowing through fins of the radiator 150. The coolant then returns to the electric-drive circuit pump 131 through the ten-way valve 101 and the electric-drive inlet coolant temperature sensor 130. Through this circulation, the temperature of the electric drive assembly 132 is reduced by using the radiator 150.

In this embodiment, when the thermal management system is under a high-temperature condition, the refrigerant circuit 1 is in a cooling mode; the first control valve 15 is in communication with the refrigerant circuit 1 and the battery thermal management circuit 12, and/or the first control valve 15 is in communication with the electric-drive cooling circuit 14 and the radiator circuit 14, thereby flexibly controlling the thermal management system and cooling the battery thermal management circuit 12 and the electric-drive cooling circuit 14 by using the refrigerant circuit 1 and the radiator circuit 14, respectively.

In an embodiment, when the thermal management system is under a medium-temperature condition, the refrigerant circuit 1 is in a dehumidification mode; the first control valve 15 is in communication with the refrigerant circuit 1, the battery thermal management circuit 12, the electric-drive cooling circuit 14, and the radiator circuit 14; and the second control valve 16 disconnects the heating circuit 11 from the battery thermal management circuit 12; or the refrigerant circuit 1 is in a non-operating mode, the first control valve 15 is in communication with the refrigerant circuit 1, the battery thermal management circuit 12, and the radiator circuit 14, and/or is in communication with the electric-drive cooling circuit 14 to form a self-circulating electric-drive cooling circuit.

As an example, when the thermal management system is under a medium-temperature condition, for example, between 15°C and 40°C, the refrigerant circuit 1 is in a dehumidification mode, the first control valve 15 is in communication with the refrigerant circuit 1, the battery thermal management circuit 12, the electric-drive cooling circuit 14, and the radiator circuit 14, and the second control valve 16 disconnects the heating circuit 11 from the battery thermal management circuit 12. As shown in Fig. 4, the electric-drive circuit pump 131 operates to drive coolant to flow through the electric drive assembly 132 to take away heat of the electric drive assembly 132. The coolant then flows through the electric-drive outlet coolant temperature sensor 133, the ten-way valve 101, the chiller inlet coolant temperature sensor, the battery chiller 141, and the ten-way valve 101, and enters the battery thermal management circuit 12 in which the power battery 112 is located. The battery circuit pump 111 in the battery thermal management circuit 12 operates to continue driving the coolant to flow through the power battery 112 to take away heat of the power battery 112. The coolant then flows through the battery outlet coolant temperature sensor 113 and the ten-way valve 101, enters the radiator 150 to be cooled, and finally returns to the electric-drive circuit pump 131 through the ten-way valve 101 and the electric-drive inlet coolant temperature sensor, completing the circulation. Through this circulation, heat of the power battery 112 and the electric drive assembly 132 is transferred to the environment through the radiator 150, thereby achieving cooling. It can be understood that, when the thermal management system is under a medium-temperature condition, for example, in spring or autumn, and the vehicle travels under a low load, the power battery 112 and the electric drive assembly 132 both generate a small amount of heat and can be cooled by the radiator 150 at the same time, thereby reducing energy consumption of the vehicle.

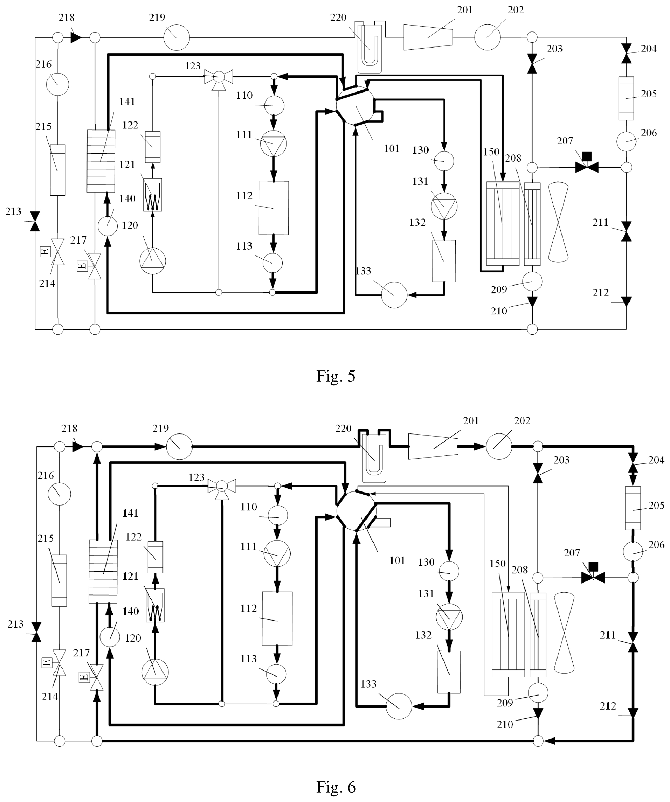

As another example, when the thermal management system is under a medium-temperature condition, the refrigerant circuit 1 is in a non-operating mode, and the first control valve 15 is in communication with the refrigerant circuit 1, the battery thermal management circuit 12, and the radiator circuit 14, and/or is in communication with the electric-drive cooling circuit 14 to form a self-circulating electric-drive cooling circuit. As shown in Fig. 5, the battery circuit pump 111 drives coolant to flow through the power battery 112 to take away heat of the power battery 112. The coolant then flows through the battery outlet coolant temperature sensor 113, the ten-way valve 101, the chiller inlet coolant temperature sensor, the battery chiller 141, and the ten-way valve 101, and is then cooled in the radiator 150, thereby reducing the temperature of the coolant. The coolant then returns to the battery circuit pump 111 through the ten-way valve 101 and the battery inlet coolant temperature sensor 110. Through this circulation, heat from the power battery 112 is dissipated to the environment through the radiator 150. For the electric-drive cooling circuit 14, the electric-drive circuit pump 131 operates to drive coolant to flow through the electric drive assembly 132, and the coolant then flows through the electric-drive circuit pump 131 and the electric-drive inlet coolant temperature sensor 130 and returns to the electric-drive circuit pump 131. Through this circulation, heat of the electric drive assembly 132 is transferred to the coolant, and the coolant is slowly heated, thereby achieving heat storage. In this example, when the thermal management system is under a medium-temperature condition, the power battery 112 is cooled by the radiator 150, and the electric drive assembly 132 performs self-circulation for heat storage. For example, when the vehicle performs fast charging of the power battery 112, the power battery 112 generates a large amount of heat during fast charging, and the temperature of the power battery 112 is reduced by the radiator 150. Compared with cooling the power battery 112 by using a compressor 201 in the refrigerant circuit 1, energy consumption of the thermal management system is significantly reduced.

In an embodiment, when the thermal management system is under a low-temperature condition, the refrigerant circuit 1 is in a heat-pump coolant-circuit heat absorption mode, the first control valve 15 is in communication with the refrigerant circuit 1 and the battery thermal management circuit 12, and/or is in communication with the electric-drive cooling circuit 14 to form a self-circulating electric-drive cooling circuit, and the second control valve 16 is in communication with the heating circuit 11; or the refrigerant circuit 1 is in a heat-pump air heat absorption mode, and the first control valve 15 is in communication with the battery thermal management circuit 12 and the electric-drive cooling circuit 14; or the refrigerant circuit 1 is in a non-operating mode, the first control valve 15 is in communication with the battery thermal management circuit 12, and/or the first control valve 15 is in communication with the electric-drive cooling circuit 14, and the second control valve 16 is in communication with the heating circuit 11 and the battery thermal management circuit 12; or the refrigerant circuit 1 is in a heat-pump air heat absorption mode, the first control valve 15 is in communication with the battery thermal management circuit 12, and/or the first control valve 15 is in communication with the electric-drive cooling circuit 14 and the radiator circuit 14, and the second control valve 16 is in communication with the heating circuit 11 and the battery thermal management circuit 12.

As an example, when the thermal management system is under a low-temperature condition, the refrigerant circuit 1 is in a heat-pump coolant-circuit heat absorption mode, the first control valve 15 is in communication with the refrigerant circuit 1 and the battery thermal management circuit 12, and/or is in communication with the electric-drive cooling circuit 14 to form a self-circulating electric-drive cooling circuit, and the second control valve 16 is in communication with the heating circuit 11. As shown in Fig. 6, the battery circuit pump 111 operates to drive coolant to flow through the power battery 112 to take away heat of the power battery 112. The coolant then flows through the battery outlet coolant temperature sensor 113, the ten-way valve 101, the chiller inlet coolant temperature sensor, and the battery chiller 141, and is cooled by low-temperature refrigerant in the battery chiller 141, thereby reducing the temperature of the coolant. The coolant then returns to the battery circuit pump 111 through the ten-way valve 101 and the battery inlet coolant temperature sensor 110. Through this circulation, heat of the power battery 112 is absorbed by using the battery chiller 141, and the heat of the power battery 112 is transferred, through the battery chiller 141, to refrigerant in the battery chiller 141, and is transferred to the passenger compartment through the refrigerant circuit 1. Meanwhile, the electric-drive circuit pump 131 operates to drive coolant to flow through the electric drive assembly 132, and the coolant then flows through the electric-drive outlet coolant temperature sensor 133 and the electric-drive inlet coolant temperature sensor 130 and returns to the electric-drive circuit pump 131. Through this circulation, heat of the electric drive assembly 132 is transferred to the coolant, and the coolant is slowly heated, thereby achieving heat storage. Meanwhile, the second control valve 16 is in communication with the heating circuit 11 and the battery thermal management circuit 12, and the heating circuit 11 is in an operating state, that is, warm air of the air conditioner of the passenger compartment is turned on. In this example, when the thermal management system is under a low-temperature condition, a heat pump in the refrigerant circuit 1 absorbs heat of the power battery 112 for heating the passenger compartment, and the electric drive assembly 132 performs self-circulation for heat storage. For example, when the vehicle performs fast charging of the power battery 112 while warm air of the air conditioner of the passenger compartment is turned on, the power battery 112 generates a large amount of heat during fast charging, and a heat pump air conditioner absorbs the heat for heating the passenger compartment, thereby saving energy of the vehicle.

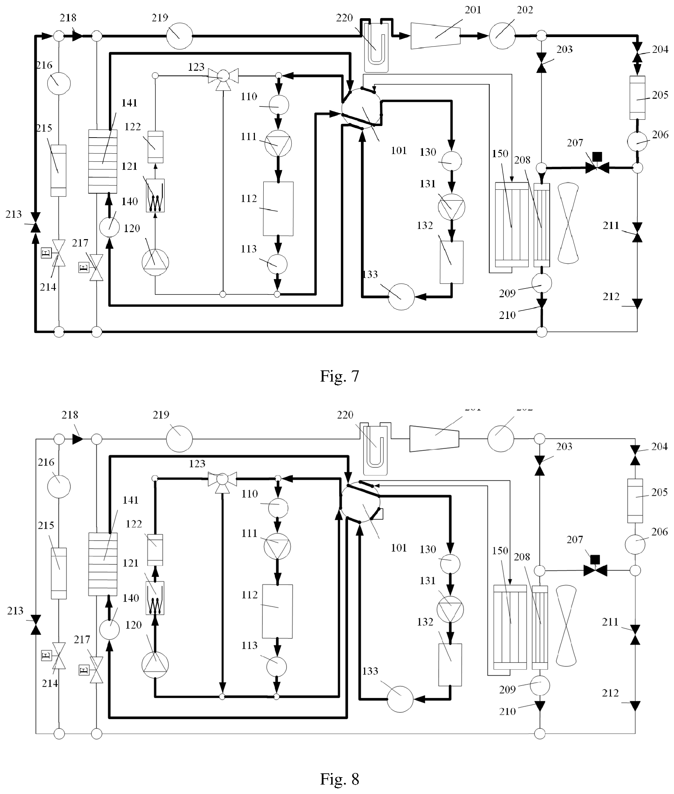

As another example, when the thermal management system is under a low-temperature condition, the refrigerant circuit 1 is in a heat-pump air heat absorption mode, and the first control valve 15 is in communication with the battery thermal management circuit 12 and the electric-drive cooling circuit 14. As shown in Fig. 7, the electric-drive circuit pump 131 operates to drive coolant to flow through the electric drive assembly 132 to take away heat therein. The coolant then flows through the electric-drive outlet coolant temperature sensor 133, the ten-way valve 101, the chiller inlet coolant temperature sensor, the battery chiller 141, the ten-way valve 101, the battery inlet coolant temperature sensor 110, and the battery circuit pump 111, and then flows through the power battery 112. The coolant heats the power battery 112, then flows through the battery outlet coolant temperature sensor 113, the ten-way valve 101, and the electric-drive inlet coolant temperature sensor 130, and finally returns to the electric-drive circuit pump 131, completing the circulation. Through this circulation, the power battery 112 absorbs heat of the electric drive assembly 132. Meanwhile, the refrigerant circuit 1 is in the heat-pump air heat absorption mode, for heating air in the passenger compartment. In this embodiment, when the thermal management system is under a low-temperature condition, the power battery 112 absorbs heat of the electric drive assembly 132, and the passenger compartment is heated by using a heat-pump air-conditioning system to absorb heat from air. For example, when the vehicle travels at a high speed, the electric drive assembly 132 generates a relatively large amount of waste heat while driving the vehicle, the power battery 112 absorbs the waste heat for heating, and the passenger compartment absorbs heat from air by using the heat pump air-conditioning system.

As another example, when the thermal management system is under a low-temperature condition, the refrigerant circuit 1 is in a non-operating mode, the first control valve 15 is in communication with the battery thermal management circuit 12, and/or the first control valve 15 is in communication with the electric-drive cooling circuit 14, and the second control valve 16 is in communication with the heating circuit 11 and the battery thermal management circuit 12. As shown in Fig. 8, the heating circuit pump 120 operates to drive coolant to flow through the coolant heater 121 and be heated thereby, so that the temperature of the coolant rises. The coolant then flows through the heater core 122 to heat air in the passenger compartment flowing through fins of the heater core 122, and then flows through the three-way valve 123. The three-way valve 123 may split the high-temperature coolant between two outlets at a certain ratio, wherein coolant at one outlet directly returns to an inlet of the heating circuit pump, and coolant at the other outlet flows into the battery thermal management circuit 12 to heat the power battery 112. Meanwhile, the battery circuit pump 111 operates to drive coolant to flow through the power battery 112 to heat the power battery 112. The coolant then flows through the battery outlet coolant temperature sensor 113, and is then divided into two paths. One path returns to the battery circuit pump 111 through the battery inlet coolant temperature sensor 110, and the other path enters the heating circuit 11 to be heated. Therefore, by means of the three-way valve 123, the coolant heater 121 can simultaneously heat the power battery 112 and the passenger compartment. It can be understood that the valve opening of the three-way valve 123 may be adjusted to adjust a proportion of heated coolant supplied to the battery thermal management circuit 12, thereby achieving energy distribution. Meanwhile, the electric-drive circuit pump 131 operates to drive coolant to flow through the electric drive assembly 132. The coolant then flows through the electric-drive outlet coolant temperature sensor 133, the ten-way valve 101, the chiller inlet coolant temperature sensor, the battery chiller 141, the ten-way valve 101, and the electric-drive inlet coolant temperature sensor 130, and returns to the electric-drive circuit pump 131. Through this circulation, heat of the electric drive assembly 132 is transferred to the coolant, and the coolant is slowly heated, thereby achieving heat storage.

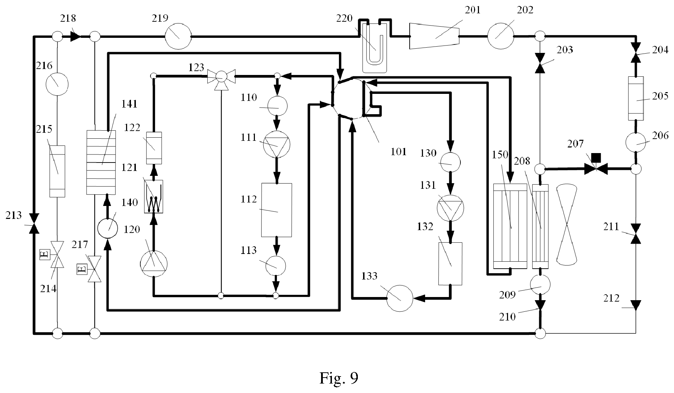

As another example, when the thermal management system is under a low-temperature condition, the refrigerant circuit 1 is in a heat-pump air heat absorption mode, the first control valve 15 is in communication with the battery thermal management circuit 12, and/or the first control valve 15 is in communication with the electric-drive cooling circuit 14 and the radiator circuit 14, and the second control valve 16 is in communication with the heating circuit 11 and the battery thermal management circuit 12. As shown in Fig. 9, the heating circuit pump operates to drive coolant to flow through the coolant heater 121 and be heated thereby, so that the temperature of the coolant rises. The coolant then flows through the heater core 122 and the three-way valve 123. Then, the battery circuit pump 111 operates to drive the coolant to flow through the power battery 112 to heat the power battery 112. The coolant then flows through the battery outlet coolant temperature sensor 113 and is divided into two paths, one of which returns to an inlet of the heating circuit pump, and the other of which returns to an inlet of the battery circuit pump 111 through the ten-way valve 101 and the battery inlet coolant temperature sensor 110. By adjusting flow rates of the heating circuit pump and the battery circuit pump 111, a flow rate of heated coolant flowing through the power battery 112 can be adjusted. Meanwhile, the electric-drive circuit pump 131 drives coolant to flow through the electric drive assembly 132 of the vehicle to take away heat of the electric drive assembly 132. The coolant returns to the electric-drive circuit pump 131 through the electric-drive outlet coolant temperature sensor 133, the ten-way valve 101, the chiller inlet coolant temperature sensor, the battery chiller 141, the ten-way valve 101, the radiator 150, and the electric-drive inlet coolant temperature sensor 130. Through this circulation, the radiator 150 dissipates heat generated by the electric drive assembly 132 to the environment, thereby facilitating heating of air in the passenger compartment by the refrigerant circuit 1 in the heat-pump air heat absorption mode.

In an embodiment, as shown in Fig. 2, the refrigerant circuit 1 includes a gas-liquid separator 220, a compressor 201, an external heat-exchange electronic expansion valve 207, a condenser branch, an evaporator branch, and an external heat exchange branch. A first end of the gas-liquid separator 220 is connected to a second end of the evaporator branch, a second end of the condenser branch, a second end of the external heat exchange branch, and the coolant circuit 2. A second end of the gas-liquid separator 220 is connected to an input end of the compressor 201, an output end of the compressor 201 is connected to a first end of the condenser branch and a first end of the external heat exchange branch, and a first end of the evaporator branch is connected to the first end of the condenser branch and the first end of the external heat exchange branch. The external heat-exchange electronic expansion valve 207 is connected to the condenser branch and the external heat exchange branch. The condenser branch includes an internal-condenser solenoid valve 204 and an external heat-exchange bypass solenoid valve 211. The evaporator branch includes an evaporator electronic expansion valve 214. The external heat exchange branch includes an internal-condenser bypass solenoid valve 203 and an external heat-exchange circuit check valve 210. The internal-condenser solenoid valve 204, the external heat-exchange bypass solenoid valve 211, the evaporator electronic expansion valve 214, the internal-condenser bypass solenoid valve 203, and the external heat-exchange circuit check valve 210 are configured to control an operating mode of the refrigerant circuit 1.

As an example, the first end of the gas-liquid separator 220 is connected, through a gas-liquid separator inlet temperature-pressure sensor 219, to the second end of the evaporator branch, the second end of the condenser branch, the second end of the external heat exchange branch, and the coolant circuit 2. An evaporator bypass solenoid valve 213 is further arranged between the gas-liquid separator inlet temperature-pressure sensor 219 and the second end of the condenser branch and the second end of the external heat exchange branch. The output end of the compressor 201 is connected, through a compressor outlet temperature-pressure sensor 202, to the first end of the condenser branch and the first end of the external heat exchange branch.

As an example, as shown in Fig. 2, the condenser branch includes an internal-condenser solenoid valve 204, a condenser 205, a condenser outlet temperature sensor 206, an external heat-exchange bypass solenoid valve 211, and an external heat-exchange bypass circuit check valve 212. The internal-condenser solenoid valve 204, the condenser 205, the condenser outlet temperature sensor 206, the external heat-exchange bypass solenoid valve 211, and the external heat-exchange bypass circuit check valve 212 are sequentially arranged in series between a first end and a second end of the condenser branch. The external heat exchange branch includes an internal-condenser bypass solenoid valve 203, an external heat exchanger 208, an external heat-exchange outlet temperature sensor 209, and an external heat-exchange circuit check valve 210. The internal-condenser bypass solenoid valve 203, the external heat exchanger 208, the external heat-exchange outlet temperature sensor 209, and the external heat-exchange circuit check valve 210 are sequentially arranged in series between a first end and a second end of the external heat exchange branch. A first end of the external heat-exchange electronic expansion valve 207 is connected to a connection node between the internal-condenser bypass solenoid valve 203 and the external heat exchanger 208, and a second end of the external heat-exchange electronic expansion valve 207 is connected to a connection node between the condenser outlet temperature sensor 206 and the external heat-exchange bypass solenoid valve 211. The evaporator branch includes an evaporator electronic expansion valve 214, an evaporator 215, and an evaporator outlet temperature-pressure sensor 216. The evaporator electronic expansion valve 214, the evaporator 215, and the evaporator outlet temperature-pressure sensor 216 are sequentially arranged in series between a first end and a second end of the evaporator branch.

Further, as shown in Fig. 3, when the internal-condenser bypass solenoid valve 203, the external heat-exchange circuit check valve 210, and the evaporator electronic expansion valve 214 are open, and the internal-condenser solenoid valve 204 and the external heat-exchange bypass solenoid valve 211 are closed, the refrigerant circuit 1 is in a cooling mode.

As shown in Fig. 4, when the internal-condenser bypass solenoid valve 203 and the external heat-exchange circuit check valve 210 are closed, and the evaporator electronic expansion valve 214, the internal-condenser solenoid valve 204, and the external heat-exchange bypass solenoid valve 211 are open, the refrigerant circuit 1 is in a dehumidification mode.

As shown in Fig. 5, when the internal-condenser bypass solenoid valve 203 and the external heat-exchange circuit check valve 210 are closed, the internal-condenser solenoid valve 204 and the external heat-exchange bypass solenoid valve 211 are open, and the evaporator electronic expansion valve 214 and the external heat-exchange electronic expansion valve 207 are closed, the refrigerant circuit 1 is in a heat-pump coolant-circuit heat absorption mode.

As shown in Fig. 7, when the internal-condenser bypass solenoid valve 203, the external heat-exchange bypass solenoid valve 211, and the evaporator electronic expansion valve 214 are closed, and the external heat-exchange circuit check valve 210 and the internal-condenser solenoid valve 204 are open, the refrigerant circuit 1 is in a heat-pump air heat absorption mode.

This embodiment provides a vehicle, including the thermal management system described above.

The embodiments described above are merely used to illustrate the technical solutions of the present application, and are not intended to limit the present application. Although the present application has been described in detail with reference to the foregoing embodiments, a person of ordinary skill in the art should understand that the technical solutions described in the foregoing embodiments may still be modified, or some technical features thereof may be equivalently replaced. Such modifications or replacements do not cause the essence of the corresponding technical solutions to depart from the spirit and scope of the technical solutions of the embodiments of the present application, and shall all fall within the protection scope of the present application.

## Claims

1. A thermal management system, comprising a battery chiller, a refrigerant circuit, and a coolant circuit;
wherein the battery chiller is connected to the refrigerant circuit and the coolant circuit, and is configured to transfer heat between the refrigerant circuit and the coolant circuit;
the coolant circuit comprises a heating circuit, a battery thermal management circuit, an electric-drive cooling circuit, a radiator circuit, a first control valve, and a second control valve;
the first control valve is connected to the second control valve, the refrigerant circuit, the heating circuit, the battery thermal management circuit, the electric-drive cooling circuit, and the radiator circuit;
the second control valve is connected to the heating circuit and the battery thermal management circuit; and
the first control valve and the second control valve are configured to cooperate with each other to switch manners of communication among the refrigerant circuit, the heating circuit, the battery thermal management circuit, the electric-drive cooling circuit, and the radiator circuit, thereby enabling heat transfer in different manners among the refrigerant circuit, the heating circuit, the battery thermal management circuit, the electric-drive cooling circuit, and the radiator circuit under different temperature conditions.

2. The thermal management system according to claim 1, wherein the first control valve is a ten-way valve;
a first end and a fourth end of the ten-way valve are connected to the refrigerant circuit and the second control valve;
a second end and a third end of the ten-way valve are connected to the battery thermal management circuit;
a fifth end and an eighth end of the ten-way valve are connected to the electric-drive cooling circuit;
a sixth end and a seventh end of the ten-way valve are connected through a pipe; and
a ninth end and a tenth end of the ten-way valve are connected to the radiator circuit.

3. The thermal management system according to claim 2, wherein the second control valve is a three-way valve;
a first end of the three-way valve is connected to a first end of the heating circuit; a second end of the three-way valve is connected to a first end of the battery thermal management circuit and the first end of the ten-way valve; and a third end of the three-way valve is connected to a second end of the heating circuit, a second end of the battery thermal management circuit, and the fourth end of the ten-way valve.

4. The thermal management system according to claim 1, wherein when the thermal management system is under a high-temperature condition,
the refrigerant circuit is in a cooling mode; and
the first control valve is in communication with the refrigerant circuit and the battery thermal management circuit, and/or the first control valve is in communication with the electric-drive cooling circuit and the radiator circuit.

5. The thermal management system according to claim 1, wherein when the thermal management system is under a medium-temperature condition,
the refrigerant circuit is in a dehumidification mode; the first control valve is in communication with the refrigerant circuit, the battery thermal management circuit, the electric-drive cooling circuit, and the radiator circuit; and the second control valve disconnects the heating circuit from the battery thermal management circuit;
or, the refrigerant circuit is in a non-operating mode, the first control valve is in communication with the refrigerant circuit, the battery thermal management circuit, and the radiator circuit, and/or the first control valve is in communication with the electric-drive cooling circuit to form a self-circulating electric-drive cooling circuit.

6. The thermal management system according to claim 1, wherein when the thermal management system is under a low-temperature condition,
the refrigerant circuit is in a heat-pump coolant-circuit heat absorption mode, the first control valve is in communication with the refrigerant circuit and the battery thermal management circuit, and/or the first control valve is in communication with the electric-drive cooling circuit to form a self-circulating electric-drive cooling circuit; the second control valve is in communication with the heating circuit;
or, the refrigerant circuit is in a heat-pump air heat absorption mode, the first control valve is in communication with the battery thermal management circuit and the electric-drive cooling circuit;
or, the refrigerant circuit is in a non-operating mode, the first control valve is in communication with the battery thermal management circuit, and/or the first control valve is in communication with the electric-drive cooling circuit; the second control valve is in communication with the heating circuit and the battery thermal management circuit;
or, the refrigerant circuit is in a heat-pump air heat absorption mode, the first control valve is in communication with the battery thermal management circuit, and/or the first control valve is in communication with the electric-drive cooling circuit and the radiator circuit; the second control valve is in communication with the heating circuit and the battery thermal management circuit.

7. The thermal management system according to claim 3, wherein the battery thermal management circuit comprises a battery inlet coolant temperature sensor, a battery circuit pump, a power battery, and a battery outlet coolant temperature sensor;
the battery circuit pump and the power battery are arranged in series between the battery inlet coolant temperature sensor and the battery outlet coolant temperature sensor; and
the battery inlet coolant temperature sensor is connected to the second end of the three-way valve and the second end of the ten-way valve, and the battery outlet coolant temperature sensor is connected to the third end of the three-way valve and the third end of the ten-way valve.

8. The thermal management system according to claim 2, wherein the electric-drive cooling circuit comprises an electric-drive inlet coolant temperature sensor, an electric-drive circuit pump, an electric drive assembly, and an electric-drive outlet coolant temperature sensor;
the electric-drive circuit pump and the electric drive assembly are arranged in series between the electric-drive inlet coolant temperature sensor and the electric-drive outlet coolant temperature sensor; and
the electric-drive inlet coolant temperature sensor is connected to the fifth end of the ten-way valve, and the electric-drive outlet coolant temperature sensor is connected to the eighth end of the ten-way valve.

9. The thermal management system according to claim 3, wherein the heating circuit comprises a heating circuit pump, a coolant heater, and a heater core;
the heating circuit pump, the coolant heater, and the heater core are arranged in series between the first end and the third end of the three-way valve.

10. The thermal management system according to claim 1, wherein the refrigerant circuit comprises a gas-liquid separator, a compressor, an external heat-exchange electronic expansion valve, a condenser branch, an evaporator branch, and an external heat exchange branch;
a first end of the gas-liquid separator is connected to a second end of the evaporator branch, a second end of the condenser branch, a second end of the external heat exchange branch, and the coolant circuit, a second end of the gas-liquid separator is connected to an input end of the compressor, an output end of the compressor is connected to a first end of the condenser branch and a first end of the external heat exchange branch, and a first end of the evaporator branch is connected to the first end of the condenser branch and the first end of the external heat exchange branch; and
the external heat-exchange electronic expansion valve is connected to the condenser branch and the external heat exchange branch.

11. The thermal management system according to claim 10, wherein the condenser branch comprises an internal-condenser solenoid valve, a condenser, a condenser outlet temperature sensor, an external heat-exchange bypass solenoid valve, and an external heat-exchange bypass circuit check valve, wherein the internal-condenser solenoid valve, the condenser, the condenser outlet temperature sensor, the external heat-exchange bypass solenoid valve, and the external heat-exchange bypass circuit check valve are sequentially arranged in series between the first end and the second end of the condenser branch;
the external heat exchange branch comprises an internal-condenser bypass solenoid valve, an external heat exchanger, an external heat-exchange outlet temperature sensor, and an external heat-exchange circuit check valve, wherein the internal-condenser bypass solenoid valve, the external heat exchanger, the external heat-exchange outlet temperature sensor, and the external heat-exchange circuit check valve are sequentially arranged in series between the first end and the second end of the external heat exchange branch;
a first end of the external heat-exchange electronic expansion valve is connected to a connection node between the internal-condenser bypass solenoid valve and the external heat exchanger, and a second end of the external heat-exchange electronic expansion valve is connected to a connection node between the condenser outlet temperature sensor and the external heat-exchange bypass solenoid valve; and
the evaporator branch comprises an evaporator electronic expansion valve, an evaporator, and an evaporator outlet temperature-pressure sensor, wherein the evaporator electronic expansion valve, the evaporator, and the evaporator outlet temperature-pressure sensor are sequentially arranged in series between the first end and the second end of the evaporator branch.

12. A vehicle, comprising the thermal management system according to any one of claims 1 to 11.
